# EUROPÄISCHE PATENTSCHRIFT

(11) **EP 0 354 388 B1**
(45) Veröffentlichungstag und Bekanntmachung des Hinweises auf die Patenterteilung: **07.09.1994**
(21) Anmeldenummer: 89113108.8
(22) Anmeldetag: 18.07.1989
(51) Int. Cl.: B23K 9/10, G05B 19/403

(54) **Einrichtung zum Lichtbogenschweissen**
Device for arc welding
Installation de soudage à l'arc

(30) Priorität: 12.08.1988 DE 3827383
(43) Veröffentlichungstag der Anmeldung: 14.02.1990
(73) Patentinhaber: Oxytechnik Ges. für Systemtechnik mbH, 65760 Eschborn (DE)
(72) Erfinder: Böhm, August, D-6233 Kelkheim/Ts. (DE)
(74) Vertreter: Roesner, Werner

(56) Entgegenhaltungen:
- EP-A- 0 272 397
- DE-A- 3 412 440
- FR-A- 2 346 756

## Beschreibung

Die vorliegnde Erfindung betrifft eine Einrichtung zum Lichtbogenschweißen nach dem Oberbegriff des Anspruchs 1.

Aus der DE-OS-3412440 ist eine derartige Einrichtung bekannt, bei denen jeweils eine besondere auf die Lösung von speziellen Schweißaufgaben zugeschnittene Mikrocomputersteuerung vorgesehen ist. Die Ansteuerung von Hilfsfunktionen erfolgt dabei über Zusatzsteuersysteme.

Für die speziellen Anwendungsfälle sind die bekannten Einrichtungen gut geeignet. Ungünstig ist es jedoch, wenn z. B. von Kundenseite die Forderung besteht, die bekannten Schweißeinrichtungen in Verbindung mit kundenspezifischen Maschinenschweißanlagen zu betreiben. Da die bekannten Steuerungen nicht ohne weiteres und einfach angepaßt werden können ist es bisher erforderlich, die bekannten Einrichtungen steuerungsmäßig zu erweitern, wobei in der Regel jedesmal sowohl hardware- als auch softwaremäßig (Betriebssystem) eine neue, andere Mikrocomputersteuerung entsteht.

Darüber hinaus haben die bekannten Mikrocomputersteuerungen keine Rückgriffsmöglichkeit auf Istwerte und z. B. deren Anzeige auf einem Bildschirm. Ebenso ist die Eingabe von komplizierten Steuerungsaufgaben zeitraubend.

Der Erfindung liegt die Aufgabe zugrunde, eine Steuerung mit einem Mikrocomputer zu schaffen, die einfach bedienbar ist, bei der jederzeit (auch während des Betriebes) auf Soll- und Istwert zurückgegriffen werden kann und die nicht nur an verschiedene Schweißaufgaben, sondern auch an unterschiedlichste Maschinenschweißanlagen ohne Änderung des Betriebssystems einfach angepaßt werden kann.

Diese Aufgabe wird durch die kennzeichnenden Merkmale des Anspruchs 1 gelöst. Weitere vorteilhafte Ausgestaltungen sind in den Unteransprüchen 2 - 4 angegeben. Durch die vorteilhafte Verknüpfung des Controllers (Mikrocomputer, Schreib-/Lesespeicher, Festspeicher) mit einem Personalcomputer wird ein PC-gesteuerter Controller erhalten, der besonders einfach zu handhaben ist und insbesondere folgende Vorteile aufweist bzw. ermöglicht:
- hohe Rechnerleistung,
- Nutzung von PC-Standardsoftware,
- große Speicherkapazität,
- leistungsfähige Datenein- und -ausgabe,
- Mehrfachnutzung und Kommunikation mit anderen Rechnern bzw. anderen Steuerungen,
- bedienergeführte Programmerstellung am Bildschirm,
- komfortable Verwaltung einer einmal erstellen Programmbibliothek,
- leichte Programmänderungsmöglichkeit,
- Überwachung, Auswertung und Anzeige der aktuellen Istwerte aller Schweißparameter am Bildschirm,
- Dokumentation der Istwerte der Schweißparameter über einen Drucker zu Abnahmezwecken,
- Datenaustausch mit übergeordnetem Rechner über Schnittstelle,
- Umrechnen von eingegebenen Werten (z.B. Eingabe der Schweißgeschwindigkeit in mm/min. und Umrechnung je nach Rohrdurchmesser auf Drehzahlwerte ¹/min. für Dreheinrichtung) und Weitergabe an Controller.

Darüber hinaus wird durch die Anbindung des PC-gesteuerten Controllers über den Systembus an das modular aufgebaute Meß- und Regelsystem eine einfache Verbindung des Rechners mit der Schweißeinrichtung sowie z. B. einer Maschinenschweißanlage möglich. Die erfindungsgemäße Steuerung ist ohne Änderung des Betriebssystems durch einfache Erweiterungsmaßnahmen im Bereich des Meß- und Regelsystems an verschiedene Maschinenkonfigurationen bzw. Leistungsteile von verschiedenen Schweißstromquellen anpaßbar. Zusätzlich können die Meßwerte des Meß- und Regelsystems als Istwerte dem Controller und/oder dem PC zugeführt und dort weiterverarbeitet werden, was z. B. eine einfache Anzeige bzw. Dokumentation der Istwerte ermöglicht. Ein Ausführungsbeispiel der Erfindung ist in der Zeichnung dargestellt und wird im folgenden näher beschrieben.
Es veranschaulicht:
- Fig. 1 -: Eine Einrichtung zum Plasmaschweißen von Rohren
- Fig. 2 -: Ein Blockschaltbild der Steuerung für die Einrichtung gemäß Fig. 1.

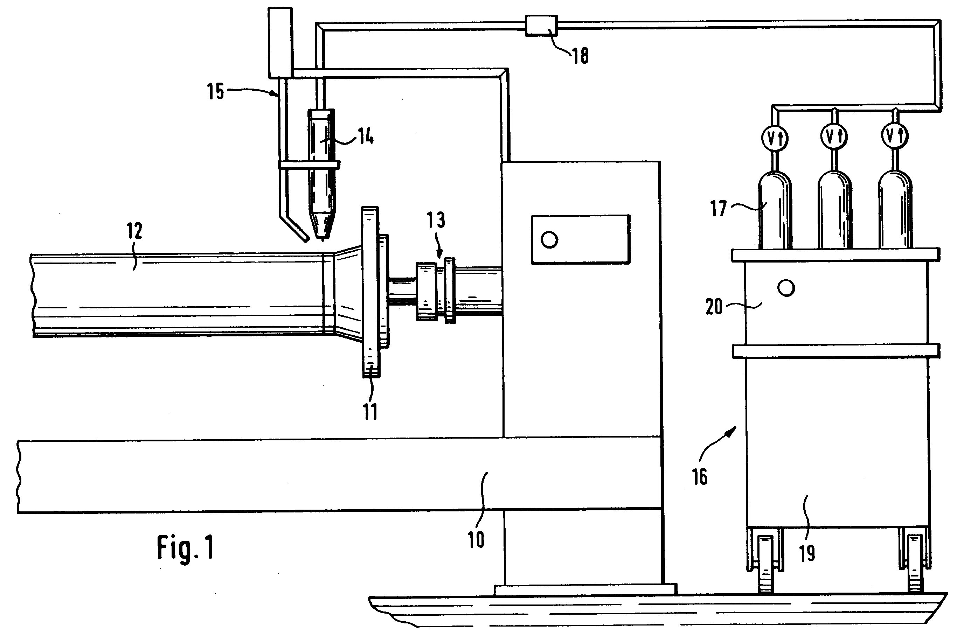

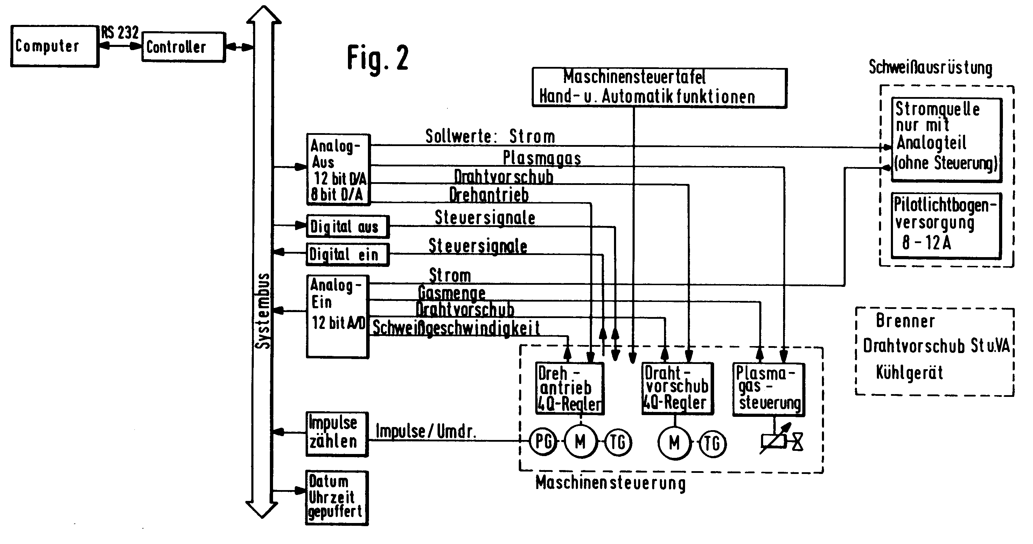

In Fig. 1 ist mit 10 eine an sich bekannte Einrichtung zum Anschweißen (Plasmastichlochschweißen) eines Flansches 11 an ein Rohr 12 bezeichnet. Die Einrichtung 10 enthält u. a. eine Spann- und Dreheinrichtung 13 für Flansch 11 und Rohr 12, einen Plasmaschweißbrenner 14 mit zugeordneter Kaltdrahtzufuhr 15, eine Plasmaschweißstromquelle 16 mit zugeordneter Gasversorgung 17 sowie eine Gassteuerung 18. Die Plasmastromquelle 16 weist ein Leistungsteil 19 mit einem Transformator auf, der einen dreiphasigen Wechselstrom liefert, welcher durch einen vollgesteuerten Stromrichtersatz von sechs Thyristoren gleichgerichtet wird. Ferner weist die Stromquelle 16 eine nicht näher dargestellte Pilotlichtbogenversorgung 20 auf. Die programmierbare Steuerung für die in Fig. 1 dargestellte Einrichtung ist in Fig. 2 dargestellt und in ihrer Gesamtheit mit 21 bezeichnet.

Die Steuerung 21 enthält einen Controller 22, der einen Mikrocomputer (Mikroprozessor, z. B. 6501 von Rockwell), eine 16 k batteriegepufferten Schreib-/Lesespeicher sowie mindestens einen Festspeicher als Eprom beinhaltet. Das bzw. die Eprom(s) nehmen das Betriebssystem und die im Controller resident gespeicherte Software auf.

Der Schreib-/Lesespeicher ist bevorzugt als Mailbox-Speicher ausgelegt, d. h. auf die im Mailbox-Speicher gespeicherten Daten hat sowohl der Mikroprozessor als auch ein über die Leitung RS-232 angeschlossener Rechner 23 schreibend und lesend Zugriff. Der Rechner 23 ist vorzugsweise als Personalcomputer ausgebildet und IBM (AT bzw. XT)-kompatibel sowie mit dem Betriebssystem MS-DOS ausgerüstet.Von der Betriebssoftware wird zu vorgegebenen Zeiten am Controller 22 ein Fenster zum Rechner 23 für eine vorgegebene Zeit (z. B. 40 Millisekunden) geöffnet. Der Controller 22 prüft während dieser Zeit, ob ein Befehl vom Rechner vorliegt und abgearbeitet werden soll, wodurch die Steuerung unmittelbar auf neue Daten reagiert. Der Controller 22 ist durch einen Systembus 24 mit einem modular aufgebauten Meß- und Regelsystem 25 verbunden. In diesem System 25 sind z.B. bis zu 14 gleiche Steckplätze vorgesehen, die die Meß-/Steuerkarten 26 - 31 entsprechend der jeweiligen zu steuernden Schweißmaschine aufnehmen. Dabei ist der Systembus 24 die elektrische Verbindung der Karten 26 - 31 untereinander sowie mit dem Controller 22 und dem PC 23. Der Systembus ist eine Zusammenfassung von einem digitalen Bus, einem Steuer- und einem Analogbus. Der Steuerbus und der digitale Bus bilden eine Wirkungseinheit und verbinden die Karten 26 - 31 mit dem Controller 22 bzw. dem PC 23. Der Analogbus verbindet die einzelnen Analog-Multiplexer über eine programmierbare Meßbereichswahl mit dem Analog-Digitalwandler. Dort endet der Analogbus, da der Analog-Digitalwandler alle analogen Signale in digitale Signale umwandelt, die über den Digitalbus dem Controller 22 zugeführt werden.

Wie aus Fig. 2 hervorgeht, ist die Analogsignal-Aus-Karte 26 zur Ausgabe der Sollwerte für Schweißstrom sowie gegebenenfalls Pulsfrequenz, Tastverhältnis vorgesehen und mit dem Leistungsteil 19 der Stromquelle 16 verbunden. Weiterhin sind die anderen Sollwert-Ausgänge der Karte 26 mit der Plasmagassteuerung 18, der Dreheinrichtung 13 sowie der Kaltdrahtsteuerung 15 verbunden. Entsprechende Istwerte der genannten Einrichtungen 13, 15, 18, 19 werden einer Analog-Istwertkarte 27 zugeführt. Steuersignale für die Maschinensteuerung z. B. Steuersignale zum Schalten von Schützen, Ansteuern von Ventilen bzw. Steuersignale von Endschaltern und Grenztasten werden zur bzw. von der Steuerung über die Digitalkarten 28 und 29 ein- bzw. ausgegeben. Die Impulskarte 30 zählt die Impulse/Umdrehung der Dreheinrichtung 13 und führt diese als Istwerte dem Controller bzw. PC zurück. Die Karte 31 gibt Datum und Uhrzeit an, was z. B. für Dokumentationszwecke erforderlich ist.

Mit dem PC 23 wird durch die Verwendung von PC-Standardprogrammen es einfach möglich, die jeweiligen Anwenderprogramme z. B. auch bereits im PC gespeicherte Programme zu erstellen bzw. abzurufen und die entsprechenden Sollwerte vorzugeben. Über die obige Steuerung 21 werden diese Sollwerte zu Steuer- bzw. Regelsignalen verarbeitet und ferner über das Meßsystem Istwerte dem Controller/PC zurückgeführt. Dies erlaubt eine Anzeige/Verarbeitung der tatsächlichen Istwerte mit PC 23 und Controller 22. Diese programmierbare Steuerung 21 ist ohne Änderung des Betriebssystems im Controller 22 ohne weiteres an andere Maschinen anpaßbar und zwar durch einfache Erweiterung des Meß- und Regelsystems 25. Beispielsweise kann durch eine zusätzliche Karte eine weitere Kaltdrahtzufuhr für andere Materialarten, z.B. Stahl und VZA oder eine Brennerpendelung oder ein Kühlgerät (s. Bezugsziffer 32), angesteuert werden, wobei die Umschaltung per Programm vom PC aus erfolgt.

Damit erfolgt durch die programmierbare Steuerung 21 sowohl die Steuerung/Regelung der Stromquelle 16 als auch die Steuerung der übrigen Schweißmaschinen, so daß Maschinenkonfigurationen aus Komponenten ohne eigenen speziellen Steuerungsteil modular aufgebaut und mit einem einzigen modularen Steuersystem angesteuert bzw. geregelt werden können. Bei Schweißanlagen ist damit die Verwendung von Stromquellen ohne deren speziellen Steuerungsteil, also nur die Verwendung des jeweils optimalsten, z.B. eines transistorisierten Leistungsteils, möglich geworden.

Weiterhin ermöglicht die erfindungsgemäße Steuerung 21 in einfacher Weise den Betrieb eines an den PC 23 angeschlossenen nicht näher dargestellten Druckers.
Ferner kann vorteilhaft der Personalcomputer 23 in Arbeitspausen durch Programmumschaltung von dem Controller 22 auf andere Arbeitsstationen bzw. Rechner umschalten und diese ansteuern.
Auch ist es vorteilhaft möglich, eine anders aufgebaute modulare Prozessorsteuerung 21 zu verwenden, z. B. anstelle Controller 21, Systembus 24 und Meß- und Regelsystem einer SPS (Speicherprogrammsteuerung) zu verwenden. Dies ist dann besonders vorteilhaft, wenn viele Digital-Ausgangssignale benötigt werden.

## Patentansprüche

1. Einrichtung zum Lichtbogenschweißen, insbesondere zum WIG- und Plasmaschweißen mit einer gesteuerten Schweißtromquelle (16), mit einem Leistungsteil (19), einer Steuerung (13, 15, 18) für Schweißvorrichtungskomponenten sowie einer übergeordneten programmierbaren Steuerung (21),
dadurch gekennzeichnet,
daß die übergeordnete programmierbare Steuerung (21) einen Personalcomputer (23) aufweist, der sowohl die Steuerung des Leistungsteils (19) der Stromquelle (16) als auch die Steuerung der Schweißvorrichtungskomponenten (13, 15, 18) übernimmt.

2. Einrichtung nach Anspruch 1,
dadurch gekennzeichnet,
daß die programmierbare Steuerung (21) einen Controller (22) mit einem Mikrocomputer, einem Schreib-/Lesespeicher und mind. einem Festspeicher aufweist, der Controller (22) eingangsseitig an den Personalcomputer (23) und ausgangsseitig über einen Systembus (24) mit einem modular aufgebauten Meß- und Regelsystem (25) verbunden ist,
die einzelnen Ausgangssignale der programmierbaren Steuerung (21) über das Meß- und Regelsystem (25) einerseits den Leistungsteil (19) der Schweißstromquelle (16) und andererseits Schweißvorrichtungskomponenten, wie Brennervorschub, Gaszuführung (18), Drahtvorschub (15), Drehantriebe (13) ansteuern und die vom Meß- und Regelsystem (25) erfaßten Meßsignale dem Controller (22) und/oder Personalcomputer (23) zur Weiterverarbeitung rückgeführt werden.

3. Einrichtung nach Anspruch 1 oder 2,
dadurch gekennzeichnet, daß
der Personalcomputer (23) in Arbeitspausen durch Programmumschaltung von dem Controller (22) auf andere Arbeitsstationen umschaltet und diese ansteuert.

4. Einrichtung nach einem der Ansprüche 1 - 3,
gekennzeichnet durch
die Verwendung in einer Plasmastichloch-Schweißmaschine mit über dem zu schweißenden sich drehenden Rohr (14) angeordneten Plasmabrenner (14) mit Kaltdrahtzuführung (15) und Plasmagassteuerung (18).

## Claims

1. Installation for arc welding, especially for TIG welding (tungsten-inert gas welding) and plasma welding with a controlled welding current power source (16), with a power unit (19), with control system (13, 15, 18) for welding equipment components as well as an overriding programmable control system (21),
with the following characteristics of,
the overriding programmable control (21), with a personal computer (23), which regulates the control of the power unit (19), that of the power source (16) as well as that of the welding equipment components (13, 15, 18).

2. Installation according to claim 1,
with the following characteristics of,
the programmable control system (21) with a controller (22) which has a microcomputer, with a write-/read-only memory store and with at least one ROM; the controller (22) has its input connection to the personal computer (23) and its output connection over a system bus (24) with a built-on modular measuring and control system (25), the individual output signals of the programmable control system (21) are controlled over the measuring and control system (25), on the one hand over the power unit (19), and on the other hand over the welding equipment components, such as torch blow pipe infeed control, gas supply (18), wire feed control, multiturn actuators, and the measurement signals collected from the measuring and control system (25), from the controller (22) and/or from the personal computer (23) are recoverable for further processing.

3. Installation according to claim 1 or 2,
with the following characteristics of,
the personal computer (23) when not in use can be used, through program change-over by the controller (22), in other work stations for controlling.

4. Installation according to one of the claims 1, 2 or 3,
with the following characteristics of,
the application in a plasma tap hole-welding machine with plasma torch placed over the turning pipe to be welded, with cooling wire feed (15) and plasma gas control (18).

## Revendications

1. Installation de soudage à l'arc, en particulier pour le soudage à l'arc TIG et au plasma, comportant une source de courant de soudage asservie (16), avec un bloc puissance (19), une commande (13, 15, 18) pour des composantes du disposititif de soudage, ainsi qu'une commande programmable privilégiée (21).
caractérisée par le fait que ,
la commande programmable privilégiée (21) présente un ordinateur personnel (23) qui assume aussi bien la commande du bloc puissance (19) de l'alimentation en courant (16), que la commande des composantes du dispositif de soudage (13, 15, 18).

2. Installation suivant la revendication 1.
caractérisée par le fait que,
la commande programmable (21) présente un contrôleur (22) avec un micro-processeur, une mémoire enrégistreur/lecteur et au moins une mémoire inaltérable, le contrôleur (22) étant relié, côté entrée, à l'ordinateur (23) et, côté sortie, par l'intermédiaire d'un bus à système (24), à un système de mesure et de réglage (25) de construction modulaire, que les différents signaux de sortie de la commande programmable (21) commandent, par l'intermédiaire du système de mesure et de réglage (25), d'une part, le bloc puissance (19) de l'alimentation en courant de soudage (16) et d'autre part, les composantes du dispositif de soudage, telles que l'avance du brûleur, l'alimentation en gaz (18), l'avance du fil de soudage (15), les dispositifs d'entraînement tournants (13) et que les signaux de mesure saisis par le système de mesure et de réglage (25) soient ramenés au contrôleur (22) et/ou à l'ordinateur (23), aux fins de continuité de traitement.

3. Installation suivant la revendication 1 ou 2,
caractérisée par le fait que,
dans les pauses de travail, à la suite d'inversion de programme, l'ordinateur (23) passe du contrôleur (22) à d'autres postes de travail en les commandant.

4. Installation suivant l'une des revendications 1 - 3,
caractérisée par le fait de
l'utilisation, dans une machine de soudage aux trous de coulées par plasma, d'un brûleur au plasma (14), disposé au dessus du tube (12) tournant, à souder, assorti d'un alimentateur en fil froid (15) et une commande d'alimentation en gas de plasma (18).
